# EUROPEAN PATENT APPLICATION

(11) **EP 3 951 577 A1**
(43) Date of publication of application: **09.02.2022**
(21) Application number: 20902433.0
(22) Date of filing: 18.06.2020
(51) Int. Cl.: G06F 3/0484

(54) **PROMPTING METHOD, TERMINAL, AND STORAGE MEDIUM**

(30) Priority: 20.12.2019 CN 201911328642
(71) Applicant: ZTE Corporation, Shenzhen, Guangdong 518057 (CN)
(72) Inventor: HU, Anni, Shenzhen, Guangdong 518057 (CN)
(74) Representative: Swindell & Pearson Limited
(86) International application number: PCT/CN2020/096759
(87) International publication number: WO 2021/120559

(57) **Abstract**

A prompting method, a terminal, and a storage medium, the method being used in a terminal comprising a flexible screen, and the method comprising: if the duration between the current time and a preset prompting time matches a preset advance duration, then acquiring the current deformation state of the flexible screen (101); and controlling the flexible screen to deform in said duration from the current deformation state to a target deformation state corresponding to the preset prompting time(102).

## Description

### CROSS-REFERENCE TO RELATED APPLICATION

The present application refers to Chinese Patent Application No. 201911328642.3 filed on December 20, 2019 and entitled "PROMPTING METHOD, TERMINAL, AND STORAGE MEDIUM", which is incorporated into the present application by reference in its entirety.

### TECHNICAL FIELD

Embodiments of the present disclosure relate to the field of communications, and in particular to a notifying method, a terminal device, and a storage medium.

### BACKGROUND

With the development of communication technology, people are becoming increasingly dependent on terminal devices such as mobile phones and tablet computers. A user may use application programs (applications for short) such as alarm clock and schedule management applications configured in a terminal device to manage time and tasks in daily life. In general, the user will set an alarm or schedule a reminder time beforehand. If the current time reaches the time set by the user, the terminal device will provide an information notification by means of interface display, audio playback, mobile phone vibrations, etc. When the terminal device is in an information notification state, the user can change parameters of the information notification to delay or turn off the information notification.

At least the following problems are found in the existing technology: before the time set by the user is reached, if the user wants to know the remaining duration from the current time to the set time, the user needs to check the current time by operating the terminal device or enter an application to check the remaining duration until the set time, so that the operation is complicated.

### SUMMARY

Embodiments of the present disclosure provide a notifying method, a terminal device and a storage medium.

To solve the above technical problems, an embodiment of the present disclosure provides a notifying method, which is applied to a terminal device including a flexible display, the method includes: obtaining a current deformation state of the flexible display in response to a duration between a current time and a preset notification time matching a preset countdown duration; and controlling the flexible display to deform within the duration from the current deformation state to a target deformation state corresponding to the preset notification time.

An embodiment of the present disclosure further provides a terminal device, including: a flexible display; at least one processor; and a memory communicatively connected to the at least one processor, where the memory stores instructions executable by the at least one processor, and the instructions are executed by the at least one processor to enable the at least one processor to execute the notifying method described above.

An embodiment of the present disclosure further provides a computer-readable storage medium storing a computer program which, when executed by a processor, implements the notifying method described above.

### BRIEF DESCRIPTION OF DRAWINGS

One or more embodiments are illustrated with reference to corresponding figures in the accompanying drawings, and these illustrations do not constitute a limitation to the embodiments. Elements having the same reference signs in the accompanying drawings represent similar elements. The figures in the accompanying drawings are not necessarily drawn to scale unless otherwise specified.
Fig. 1 is a flowchart of a notifying method according to a first embodiment of the present disclosure;
Fig. 2 is a flowchart of a specific implementation of step 102 according to the first embodiment of the present disclosure;
Fig. 3 is a flowchart of a notifying method according to a second embodiment of the present disclosure;
Fig. 4 is a flowchart of a notifying method according to a third embodiment of the present disclosure;
Fig. 5 is a flowchart of a notifying method according to a fourth embodiment of the present disclosure; and
Fig. 6 is a schematic diagram of a terminal device according to a fifth embodiment of the present disclosure.

### DETAILED DESCRIPTION

In order to make the purposes, technical schemes and advantages of the embodiments of the present disclosure clearer, the embodiments of the present disclosure will be described in detail with reference to the accompanying drawings. Those having ordinary skill in the art can understand that, in various embodiments of the present disclosure, many technical details have been set forth in order to enable readers to better understand the present disclosure. However, even without these technical details and various changes and modifications based on the following embodiments, the technical schemes of the present disclosure can be implemented. The following embodiments are divided for convenience of description, and should not constitute any limitation on the specific implementation of the present disclosure. The embodiments can be combined with and referenced by each other with no conflict.

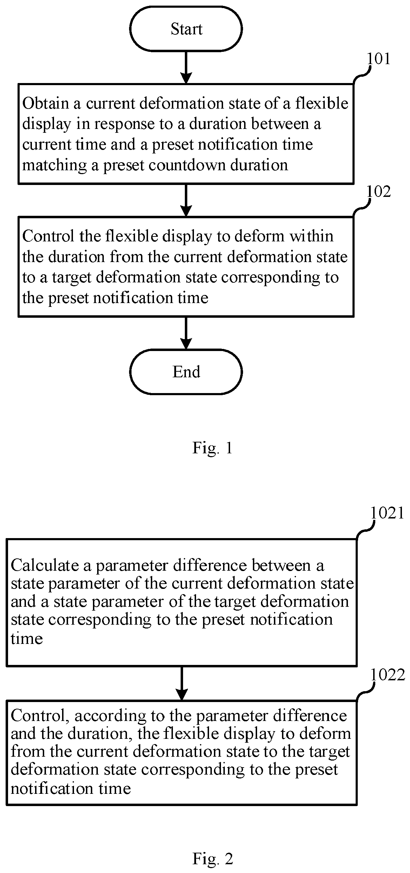

The first embodiment of the present disclosure relates to a notifying method, which is applied to a terminal device including a flexible display. As shown in Fig. 1, the specific process includes the following steps:
At step 101, a current deformation state of the flexible display is obtained in response to a duration between a current time and a preset notification time matching a preset countdown duration.

The preset notification time and the preset countdown duration are set by a user according to actual needs and stored in the terminal device. When the current time is before the preset notification time, the terminal device first calculates the duration between the current time and the preset notification time, and then determines whether the duration between the current time and the preset notification time matches the preset countdown duration. If the duration between the current time and the preset notification time is less than or equal to the preset countdown duration, the matching succeeds; and if the duration between the current time and the preset notification time is greater than the preset countdown duration, the matching fails.

The current deformation state of the flexible display is obtained in response to the duration between a current time and the preset notification time matching the preset countdown duration. In an example, a plurality of distance sensors are pre-arranged at different positions of the flexible display. The plurality of distance sensors obtain a state parameter of the deformation state of the flexible display by converting distances between points at the different positions of the flexible display. In an example, sensors are pre-arranged at bent parts of hardware of the flexible display, and a state parameter of the flexible display is obtained by obtaining a specific bending parameter of the hardware. The deformation state includes at least one of the following state parameters: a deformation position and a deformation angle. The state parameter of the deformation state of the flexible display is determined according to the characteristics of the flexible display. In an example, the flexible display of the terminal device is a flexible display supporting uniaxial folding, which has a fixed pivot shaft, and the included angle between two half-screens from fully unfolding to fully folding changes from 180° to 0°. In this case, the state parameter of the deformation state of the flexible display includes at least a deformation angle. In an example, the flexible display of the terminal device is a shaftless fully-flexible display, which can be folded and bent at any position of the screen. In this case, the state parameter of the deformation state of the flexible display includes at least a deformation position and a deformation angle, where the deformation position includes an abscissa position and an ordinate position.

At step 102, the flexible display is controlled to deform within the duration from the current deformation state to a target deformation state corresponding to the preset notification time.

Within the duration, the flexible display is controlled to be always in the deformation state, that is, continuously deformed from the current deformation state to the target deformation state corresponding to the preset notification time. The target deformation state corresponding to the preset notification time is stored in the terminal device. For example, if the preset notification time is 9: 00 AM, the corresponding target deformation state is 90 degrees. In an example, a deformation driving circuit is pre-arranged below the flexible display, and the deformation driving circuit realizes changes between different forms by controlling screen tension values at different positions of the flexible display. In an example, a deformation control module is pre-arranged at a bendable part of hardware of the flexible display, and changes between different forms can be realized through changes in torsion at the bendable joint of the hardware. It should be noted that the target deformation state corresponding to the preset notification time for different information is different. For example, an alarm clock in the terminal device may provide a notification. When the alarm clock is set to provide a notification at 9: 00 AM, the corresponding target deformation state is 90 degrees. A reminder in the terminal device may also provide a notification. When the reminder is set to provide a notification at 9: 00 AM, the corresponding target deformation state is 120 degrees.

The terminal device in this embodiment includes an obtaining module and a control module. The obtaining module is configured to obtain the current deformation state of the flexible display in response to the duration between the current time and the preset notification time matching the preset countdown duration. The control module is configured to control the flexible display to deform within the duration from the current deformation state to a target deformation state corresponding to the preset notification time.

In an example, before controlling the flexible display to deform within the duration from the current deformation state to a target deformation state corresponding to the preset notification time, the method further includes: determining whether the current deformation state of the flexible display meets an initial deformation condition. If the initial deformation condition is met, the flexible display is controlled to deform within the duration from the current deformation state to a target deformation state corresponding to the preset notification time. Otherwise, a notification is provided in an audible and/or visual notification mode when the preset notification time is reached. The setting of the initial deformation condition is determined according to the deformable deformation states of the flexible display of the terminal device. For example, if a terminal device cannot deform by itself at 30-50 degrees due to special restrictions, when the current deformation state of the flexible display is at 40 degrees, the initial deformation condition is not met, the flexible display will not be deformed, and only a notification is provided in an audible and/or visual notification mode when the preset notification time arrives.

In an example, the flowchart of controlling the flexible display to deform within the duration from the current deformation state to a target deformation state corresponding to the preset notification time, as shown in Fig. 2, includes:
- step 1021: calculating a parameter difference between a state parameter of the current deformation state and a state parameter of the target deformation state corresponding to the preset notification time;
- step 1022: controlling, according to the parameter difference and the duration, the flexible display to deform from the current deformation state to the target deformation state corresponding to the preset notification time.

The terminal device calculates the parameter difference between the state parameter of the current deformation state and the state parameter of the target deformation state corresponding to the preset notification time, and calculates a deformation speed by using a deformation rule pre-stored in the terminal device. Since the deformation rule includes a deformation function, the deformation speed can be calculated by inputting the duration and the difference into the deformation function, and then the flexible display is controlled according to the deformation speed to provide a notification by deformation. For example, when the alarm clock is set to provide a notification at 9: 00 AM, the corresponding target deformation state is 90 degrees, the preset countdown duration is 10 minutes, and the deformation parameter of the current deformation state of the flexible display is 0 degrees. If the function in the deformation rule is v = s/t, the deformation speed is 9 degrees/min, that is, the flexible display is deformed from 0 to 90 degrees at a constant speed of 9 degrees/min from 8: 50 to 9: 00, that is, within 10 minutes. It should be noted that if many deformation functions are included in the deformation rule, the calculated speeds may be different. The terminal device in this embodiment includes an obtaining module, a control module and a calculation module. The obtaining module is configured to obtain the current deformation state of the flexible display in response to the duration between the current time and the preset notification time matching the preset countdown duration. The calculation module is configured to calculate a parameter difference between a state parameter of the current deformation state and a state parameter of the target deformation state corresponding to the preset notification time. The control module is configured to control, according to the parameter difference and the duration, the flexible display to deform within the duration from the current deformation state to a target deformation state corresponding to the preset notification time.

In this embodiment, a current deformation state of the flexible display is obtained in response to the duration between a current time and the preset notification time matching the preset countdown duration; and the flexible display is controlled to deform within the duration from the current deformation state to a target deformation state corresponding to the preset notification time. Within the duration, controlling the deformation of the flexible display can help the user perceive the passage of time to achieve the purpose of notifying the user in advance, and help the user make decisions in advance.

The second embodiment of the present disclosure relates to a notifying method. This embodiment is substantially the same as the first embodiment, except that a notification is provided in an audible and/or visual notification mode in response to the preset notification time being reached.

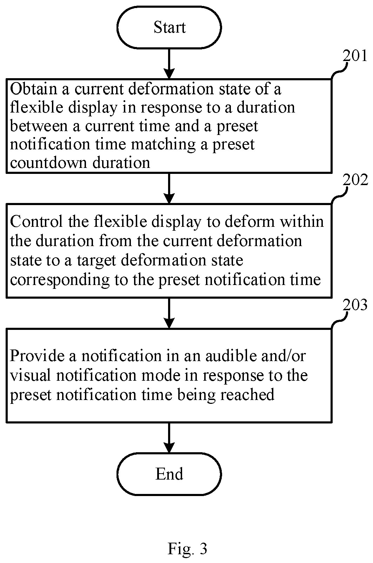

The flowchart of the notifying method in this embodiment, as shown in Fig. 3, includes the following steps:
At step 201, a current deformation state of the flexible display is obtained in response to a duration between a current time and a preset notification time matching a preset countdown duration.
At step 202, the flexible display is controlled to deform within the duration from the current deformation state to a target deformation state corresponding to the preset notification time.

Steps 201 and 202 are similar to steps 101 and 102, respectively, and will not be described in detail here.

At step 203, a notification is provided in an audible and/or visual notification mode in response to the preset notification time being reached.

The audible and/or visual notification mode may be an audio notification and/or a visual notification, in which the audio notification is a notification provided by the terminal device by means of ringing, and the visual notification is a notification provided by the terminal device by means of lighting up the flexible display. It should be noted that in the audible and/or visual notification mode, a notification is provided within a notification period. For example, if the preset notification time is 9: 00 AM and the notification period is 1 minute, the terminal device will ring for 1 minute from 9: 00 AM to provide a notification in an audible notification mode. It should be noted that at the preset notification time, the flexible display is in the target deformation state corresponding to the preset notification time.

In this embodiment, a current deformation state of the flexible display is obtained in response to the duration between a current time and the preset notification time matching the preset countdown duration; the flexible display is controlled to deform within the duration from the current deformation state to a target deformation state corresponding to the preset notification time; and a notification is provided in an audible and/or visual notification mode in response to the preset notification time being reached. The notification is provided by controlling the deformation of the flexible display before the preset notification time; and the notification is provided in an audible and/or visual notification mode in response to the preset notification time being reached. The purpose of notifying the user is achieved by dual notification modes, so that the user can also perceive the process during which the preset notification time is approaching.

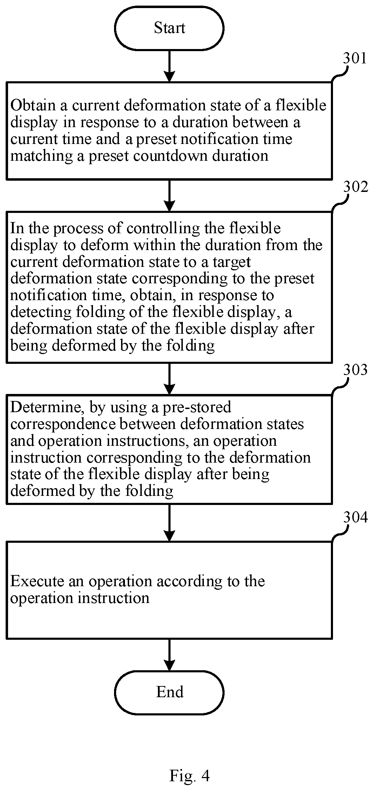

The third embodiment of the present disclosure relates to a notifying method. This embodiment is substantially the same as the first embodiment, except that in the process of controlling the flexible display to deform within the duration from the current deformation state to a target deformation state corresponding to the preset notification time, the method further includes: obtaining, in response to detecting folding of the flexible display, a deformation state of the flexible display after being deformed by the folding; determining, by using a pre-stored correspondence between deformation states and operation instructions, an operation instruction corresponding to the deformation state of the flexible display after being deformed by the folding; and executing an operation according to the operation instruction. As shown in Fig. 4, the specific flowchart includes the following steps:
At step 301, a current deformation state of the flexible display is obtained in response to a duration between a current time and a preset notification time matching a preset countdown duration.

Step 301 is similar to step 101 and will not be described in detail here.

At step 302, in the process of controlling the flexible display to deform within the duration from the current deformation state to a target deformation state corresponding to the preset notification time, in response to detecting folding of the flexible display, a deformation state of the flexible display after being deformed by the folding is obtained.

A pressure sensor is pre-arranged below the flexible display of the terminal device, and when the pressure of the flexible display changes, it is indicated that the flexible display is folded by an external force. If the pressure sensor detects folding of the flexible display, the deformation state of the flexible display after being deformed by the folding is obtained. If folding of the flexible display is not detected, it is indicated that the user has not operated the flexible display, so it can be considered that the user performs no operation. In this state, a notification may be provided in an audible and/or visual notification mode when the preset notification time arrives. The audible and/or visual notification mode may be an audio notification and/or a visual notification, in which the audio notification is a notification provided by the terminal device by means of ringing, and the visual notification is a notification provided by the terminal device by means of lighting up the flexible display.

At step 303, an operation instruction corresponding to the deformation state of the flexible display after being deformed by the folding is determined by using a pre-stored correspondence between deformation states and operation instructions.

At step 304, an operation is executed according to the operation instruction.

The operation instruction includes at least to delay the notification and to deactivate the notification, and the corresponding relationship between deformation states and operation instructions prestored in the terminal device is utilized: for an interval [D1, D1'] of the state parameter of the deformation state, the operation instruction corresponding to this interval is to delay the notification; and for an interval [D2, D2'] of the state parameter of the deformation state, the operation instruction corresponding to this interval is to deactivate the notification. According to the corresponding relationship, the operation instruction, which corresponds to the deformation state of the flexible display after being deformed by the folding, can be determined, and the operation can be executed according to the operation instruction. If there is no operation instruction corresponding to the deformation state of the flexible display after being deformed by the folding, it may be the user's maloperation, and it can also be considered that the user performs no operation. In this state, a notification may be provided in an audible and/or visual notification mode when the preset notification time arrives. For example, for an interval [175°, 180°] of the state parameter corresponding to the deformation state, the corresponding operation instruction is to delay the notification; and for an interval [0°, 5°] of the state parameter of the deformation state, the corresponding operation instruction is to deactivate the notification. If the state parameter of the deformation state of the flexible display after being deformed by the folding is 176°, the notification is to be delayed; if the state parameter of the deformation state of the flexible display after being deformed by the folding is 3°, the notification is to be deactivated; and if the state parameter of the deformation state of the flexible display after being deformed by the folding is 10°, no operation is confirmed.

When the operation instruction is to delay the notification, a delayed notification time is calculated, and the flexible display is controlled to deform within a preset delay duration from the current deformation state to a target deformation state corresponding to the delayed notification time. The delayed notification time is equal to a time at which the folding of the flexible display is detected plus the preset delay duration. For example, if the time at which the folding of the flexible display is detected is 8:52 and the preset delay duration is 3 minutes, the delayed notification time is 8:55. It should be noted that the target deformation state corresponding to the delayed notification time may be the same as or different from the target deformation state corresponding to the preset notification time. In an example, when the operation instruction is to delay the notification, the delayed notification time is calculated, and a notification is provided in an audible and/or visual notification mode in response to the delayed notification time being reached. When the operation instruction is to deactivate the notification, the deformation notification mode and the audible and/or visual notification mode are deactivated, and the notification ends. When the user performs no operation, the flexible display is controlled to continue to deform, and a notification is provided in an audible and/or visual notification mode when the preset notification time arrives.

At present, many users will use mobile terminal devices to set morning alarms. For example, a morning alarm is set for 7:30 AM, the preset countdown duration is 20 minutes, the preset delay duration is 5 minutes, and the maximum number of delays is 2. In this case, the flexible display of the terminal device is a shaftless fully-flexible display, the target deformation state only changes in an X-axis, and the deformation parameter of the deformation state is D (X, A), where X refers to the deformation position of the deformation state in the X-axis, and A is the deformation angle of the deformation state. When the deformation angle A is always 120°, the influence of changes in the deformation position of the deformation state in the X-axis on the deformation state of the flexible display, that is, the lifting height of the entire device will change with the change of the deformation position. When the user manually flattens the terminal device, the corresponding deformation parameter D is (0%, A) and the notification is to be delayed. When the user completely folds the terminal device at any position, the deformation parameter D is (X, 0°) and the notification is to be deactivated. In the process of notification by the deformation of the flexible display, only the deformation position of the deformation state in the X-axis is to be changed, that is, if the deformation parameter of the current deformation state is D0 (0%, 120°), the deformation parameter of the target deformation state Dₘₐₓ is (50%, 120°). The whole deformation process changes at a constant speed, that is, if there is a preset notification time when the terminal device is in a fully unfolded state, the terminal device generates an included angle in the flexible display, and the deformation position is adjusted from the edge gradually to the middle of the flexible display, so as to realize the effect of gradually lifting the device. When the maximum height is reached, the audio and visual notifications start.

In the actual process of getting up, there are the following situations: when the user wakes up before 7:10 and observes that the mobile terminal device provides no deformation notification, the user can determine that there is still time for more sleep and can fall asleep again. When the user wakes up between 7: 10 and 7:30 and observes that the terminal device is being in a deformation state, the user can determine the approximate time by means of the deformation state and then make a decision to get up and deactivate the alarm by folding the flexible display to, or delay the waking-up time by 5 minutes by flattening the flexible display, or still get up at 7: 30. When the user receives an audio and visual notification at 7:30, the user can directly fold the flexible display to turn off the alarm, or flatten the flexible display to delay the waking-up time by 5 minutes for snoozing the alarm. In the process of delaying the notification, the flexible display is also being deformed. When the user misses the alarm notification at 7:30, the alarm clock supports two times of automatic re-ringing, and will re-ring every five minutes. In the whole process of re-ringing, the user can deactivate the notification by folding the flexible display or delay the notification by flattening the flexible display. The morning alarm based on this method provides a better duration notification for the user in the whole morning wake-up process, helps the user make decisions, and is also more flexible in the operation of the alarm notification.

In this embodiment, in the process of controlling the flexible display to deform within the duration from the current deformation state to a target deformation state corresponding to the preset notification time, the user may change the deformation state of the flexible display to cause the terminal device to perform corresponding operations, so that the user can operate the notification more flexibly and conveniently.

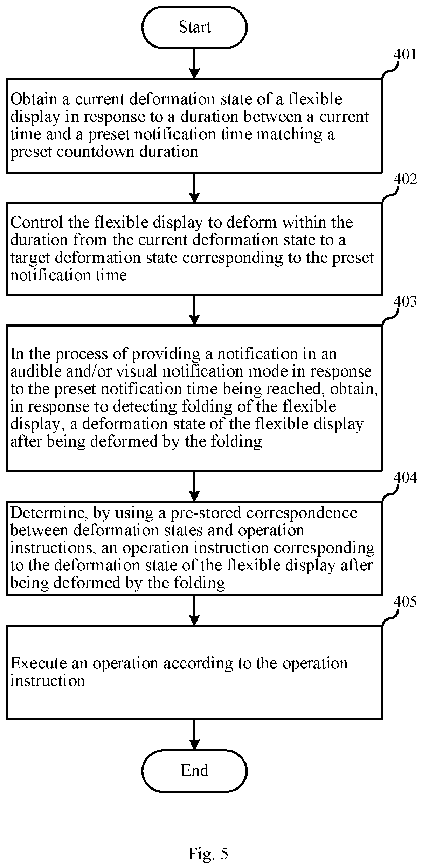

The fourth embodiment of the present disclosure relates to a notifying method. This embodiment is substantially the same as the first embodiment, except that in the process of providing a notification in an audible and/or visual notification mode, the method further includes: obtaining, in response to detecting folding of the flexible display, a deformation state of the flexible display after being deformed by the folding; determining, by using a pre-stored correspondence between deformation states and operation instructions, an operation instruction corresponding to the deformation state of the flexible display after being deformed by the folding; and executing an operation according to the operation instruction. As shown in Fig. 5, the specific flowchart includes the following steps:
At step 401, a current deformation state of the flexible display is obtained in response to a duration between a current time and a preset notification time matching a preset countdown duration.
At step 402, the flexible display is controlled to deform within the duration from the current deformation state to a target deformation state corresponding to the preset notification time.
At step 403, in the process of providing a notification in an audible and/or visual notification mode in response to the preset notification time being reached, in response to detecting folding of the flexible display, a deformation state of the flexible display after being deformed by the folding is obtained.
At step 404, an operation instruction corresponding to the deformation state of the flexible display after being deformed by the folding is determined by using a pre-stored correspondence between deformation states and operation instructions.
Steps 401 and 402 are similar to steps 101 and 102, respectively, while steps 403 and 404 are similar to steps 302 and 303, respectively, and these similar steps will not be described in detail here.
At step 405, an operation is executed according to the operation instruction.

When the operation instruction is to delay the notification, the audible and/or visual notification mode is deactivated, a delayed notification time is calculated, and the flexible display is controlled to deform within a preset delay duration from the current deformation state to a target deformation state corresponding to the delayed notification time. The delayed notification time is equal to a time at which the folding of the flexible display is detected plus the preset delay duration. In an example, when the operation instruction is to delay the notification, the delayed notification time is calculated, and a notification is provided in an audible and/or visual notification mode in response to the delayed notification time being reached. When the operation instruction is to deactivate the notification, the deformation notification mode and the audible and/or visual notification mode are deactivated, and the notification ends. When the user performs no operation, once the preset notification time is reached, the audible and/or visual notification mode is deactivated, the deformation state of the flexible display is maintained, the delayed notification time is calculated, and a notification is provided in an audible and/or visual notification mode when the delayed notification time arrives.

In real life, it is very important for a respondent to grasp the time in a defense process. A time rule in a defense scenario is set as follows: if the total duration of the defense is 20 minutes and the current time is 13:40, the preset notification time of the defense is 14: 00, the preset countdown duration is 5 minutes, that is, the remaining time is notified at 13:55, and the end of the defense is notified at 14: 00; and if the respondent has not completed the defense at the end time, he/she can delay the defense for another 3 minutes for quick summary, that is, the preset delay duration is 3 minutes, and the respondent cannot continue to defense after the delay duration is over. In this case, the flexible display of the terminal device is a flexible display supporting uniaxial folding, and the degree of the included angle between the two half-screens is taken as the state parameter D, and the variable range of the terminal device itself is [0°, 180°], where 0° means that the terminal device device is fully folded, and 180° means that the terminal device device is fully unfolded. When the included angle between the screens becomes 180°, the notification is to be delayed. When the included angle between the screens is 0°, the notification is to be deactivated. In this scenario, the state parameter Dₘₐₓ of the target deformation state is 120°, and the whole deformation process changes at a constant speed, that is, if there is a preset notification time when the terminal device is in a fully unfolded state, the terminal device starts to gradually reduce the included angle of the flexible display until the included angle reaches 120° and starts to ring and display notification information when the preset notification time arrives. In the specific defense process, at 13:55, 5 minutes before the end time of the defense, the terminal device device obtains the deformation parameter of 180° of the current deformation state of the flexible display, then controls the deformation of the flexible display to perform deformation, so as to inform the respondent that there are only 5 minutes left, and changes from 180° to 120° at a constant speed within 5 minutes to notify the respondent of the entire passage of the time. At 14: 00, if the respondent has completed the defense, he/she can directly deactivate the notification by folding the flexible display; and if the respondent still has content to be finished, the terminal device is flattened to change the included angle of the terminal device to 180°, and the ending is delayed by 3 minutes. In the delayed duration, the flexible display also notifies the respondent of the time by means of deformation, and rings after the end of the 3 minutes, and the respondent cannot continue to defense then. Through the gradual deformation of the flexible display in the whole process, the user can better manage the time in the defense process and make the oral defense at an appropriate pace.

In this embodiment, in the process of providing a notification in an audible and/or visual notification mode, the user may change the deformation state of the flexible display to cause the terminal device to perform corresponding operations, so that the user can operate the notification more flexibly and conveniently.

The steps of the above methods are divided only for the sake of clear description, and during implementation, the steps may be combined into one step or one step may be split into multiple steps. All shall fall within the scope of protection of the present disclosure provided that the same logical relationship is included. Insignificant modifications added to or insignificant designs introduced into an algorithm or a procedure without changing the core of the algorithm or the procedure shall fall within the scope of protection of the present disclosure.

It is worth mentioning that all the modules involved in the embodiments are logic modules. In practical applications, a logic unit may be a physical unit or a part of a physical unit, or be implemented by a combination of multiple physical units. In addition, in order to highlight the innovative part of the present disclosure, units that are not closely related to solving the technical problem proposed by the present disclosure are not introduced in this embodiment, but this does not mean that there are no other units in this embodiment.

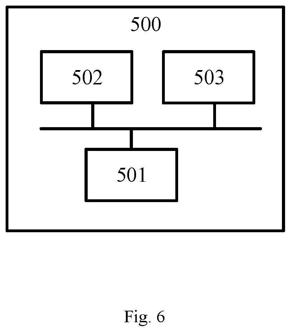

The fifth embodiment of the present disclosure relates to a terminal device 500, as shown in Fig. 6, which includes: a flexible display 503; at least one processor 501; and a memory 502 communicatively connected to the at least one processor 501. The memory 502 stores instructions executable by the at least one processor, and the instructions are executed by the at least one processor to enable the at least one processor to execute the notifying method described above.

The memory 502 and the at least one processor 501 are connected by means of a bus, and the bus may include any number of bus interconnects and bridges, and the bus connects the at least one processor 501 and various circuits of the memory 502 together. The bus may also connect various other circuits such as a peripheral device, a voltage regulator and a power management circuit, which are well known in the art and therefore will not be further described here. A bus interface provides an interface between the bus and a transceiver. The transceiver may be one element or multiple elements, such as multiple receivers and transmitters, and provide a unit for communicating with various other apparatuses on a transmission medium. Data that has been processed by the processor 501 is transmitted on a wireless medium by means of an antenna. Further, the antenna also receives data and transmits the data to the processor 501.

The processor 501 is responsible for bus management and general processing, and may also provide various functions, including timing, peripheral interface, voltage regulation, power management and other control functions. The memory 502 may be configured to store data used by the processor 501 when performing operations.

The sixth embodiment of the present disclosure relates to a computer-readable storage medium storing a computer program. The computer program, when executed by the processor, implements the methods according to the embodiments above.

That is, those having ordinary skill in the art can understand that all or some of the steps in the methods for implementing the above embodiments can be completed by instructing related hardware through a program, which is stored in a storage medium and includes several instructions configured to enable a device (which may be a single-chip microcomputer, a chip, etc.) or a processor to execute all or some of the steps of the methods according to the embodiments of the present disclosure. The aforementioned storage medium includes: various media that can store program codes, such as a USB flash drive, a mobile hard disk, a read-only memory (ROM), a random-access memory (RAM), a magnetic disk or an optical disk.

Those having ordinary skill in the art can understand that the above embodiments are specific embodiments for implementing the present disclosure, but in practical applications, various changes in form and detail can be made therein without departing from the principle and scope of the present disclosure.

## Claims

1. A notifying method, which is applied to a terminal device comprising a flexible display, the method comprising:
obtaining a current deformation state of the flexible display in response to a duration between a current time and a preset notification time matching a preset countdown duration; and
controlling the flexible display to deform within the duration from the current deformation state to a target deformation state corresponding to the preset notification time.

2. The notifying method of claim 1, wherein controlling the flexible display to deform within the duration from the current deformation state to a target deformation state corresponding to the preset notification time comprises:
calculating a parameter difference between a state parameter of the current deformation state and a state parameter of the target deformation state corresponding to the preset notification time; and
controlling, according to the parameter difference and the duration, the flexible display to deform from the current deformation state to the target deformation state corresponding to the preset notification time.

3. The notifying method of claim 1, wherein after controlling the flexible display to deform within the duration from the current deformation state to a target deformation state corresponding to the preset notification time, the method further comprises:
providing a notification in an audible and/or visual notification mode in response to the preset notification time being reached.

4. The notifying method of claim 3, wherein in the process of controlling the flexible display to deform within the duration from the current deformation state to a target deformation state corresponding to the preset notification time, and/or in the process of providing a notification in an audible and/or visual notification mode, the method further comprises:
obtaining, in response to detecting folding of the flexible display, a deformation state of the flexible display after being deformed by the folding;
determining, by using a pre-stored correspondence between deformation states and operation instructions, an operation instruction corresponding to the deformation state of the flexible display after being deformed by the folding; and
executing an operation according to the operation instruction.

5. The notifying method of claim 4, wherein, when the operation instruction is to delay the notification, executing an operation according to the operation instruction comprises:
calculating a delayed notification time; and
controlling the flexible display to deform within a preset delay duration from the current deformation state to a target deformation state corresponding to the delayed notification time.

6. The notifying method of claim 5, wherein in the process of providing a notification in an audible and/or visual notification mode,
when the operation instruction is to delay the notification, executing an operation according to the operation instruction further comprises:
deactivating the audible and/or visual notification mode.

7. The notifying method of claim 5, wherein the delayed notification time is equal to a time at which the folding of the flexible display is detected plus the preset delay duration.

8. The notifying method of claim 1, wherein the deformation state includes at least one of the following state parameters: a deformation position and a deformation angle.

9. A terminal device, comprising:
a flexible display;
at least one processor; and
a memory communicatively connected to the at least one processor,
wherein the memory stores instructions which, when executed by the at least one processor, cause the at least one processor to perform the notifying method of any one of claims 1 to 8.

10. A computer-readable storage medium storing a computer program which, when executed by a processor, implements the notifying method of any one of claims 1 to 8.
